# EUROPÄISCHE PATENTSCHRIFT

(11) **EP 0 906 207 B1**
(45) Veröffentlichungstag und Bekanntmachung des Hinweises auf die Patenterteilung: **29.01.2003**
(21) Anmeldenummer: 98912223.9
(22) Anmeldetag: 14.02.1998
(51) Int. Cl.: B60T 8/00

(54) **VERFAHREN UND VORRICHTUNG ZUR ERMITTLUNG EINER DIE FAHRZEUGGESCHWINDIGKEIT BESCHREIBENDEN GRÖSSE**
METHOD AND DEVICE FOR DETERMINING A VARIABLE DESCRIBING THE SPEED OF A VEHICLE
PROCEDE ET DISPOSITIF POUR DETERMINER UNE GRANDEUR REPRESENTANT LA VITESSE D'UN VEHICULE

(30) Priorität: 29.03.1997 DE 19713253
(43) Veröffentlichungstag der Anmeldung: 07.04.1999
(73) Patentinhaber: ROBERT BOSCH GMBH, 70442 Stuttgart (DE)
(72) Erfinder: MUELLER, Elmar, D-71706 Markgröningen (DE)
(86) Internationale Anmeldenummer: DE9800427
(87) Internationale Veröffentlichungsnummer: WO98043859

(56) Entgegenhaltungen:
- DE-A- 4 314 830
- DE-A- 19 522 135
- DE-C- 4 418 772
- US-A- 4 989 923

## Beschreibung

### Stand der Technik

Die Erfindung betrifft ein Verfahren bzw. eine Vorrichtung zur Ermittlung einer die Fahrzeuggeschwindigkeit beschreibenden Größe.

Verfahren und Vorrichtungen zur Ermittlung einer die Fahrzeuggeschwindigkeit beschreibenden Größe sind aus dem Stand der Technik in vielerlei Modifikationen bekannt.

In der DE-OS 38 33 212 (US 5,272,634) ist für ein mit einem Antiblockierregelsystem ausgestattetes, einachsig angetriebenes Fahrzeug, die Bildung einer Referenzgröße für die Fahrzeuggeschwindigkeit außerhalb der Bremsdruckregelung beschrieben. Im wesentlichen wird hierzu ausgehend von den Geschwindigkeiten der beiden angetriebenen Räder eine gemittelte Radgeschwindigkeit ermittelt. Ist die zeitliche Ableitung dieser gemittelten Radgeschwindigkeit größer Null, so wird die Referenzgröße durch die Geschwindigkeit des langsameren der beiden angetriebenen Räder bestimmt. Ist die zeitliche Ableitung dieser gemittelten Radgeschwindigkeit kleiner Null, so wird die Referenzgröße durch die Geschwindigkeit des schnelleren der beiden angetriebenen Räder bestimmt. Dabei ist die Steigung der Referenzgröße für die Fahrzeuggeschwindigkeit auf einen maximalen Wert beschränkt.

Die DE-OS 40 09 195 (US 5,364,174) beschreibt für ein in einem allradgetriebenen Fahrzeug eingesetztes Antiblockierregelsystem die Bildung einer für die Schlupfregelung benötigten Referenzgeschwindigkeit. Im wesentlichen wird hierbei die Referenzgeschwindigkeit bei Geschwindigkeitszunahme durch die Geschwindigkeit des langsamsten und bei Geschwindigkeitsabnahme durch die Geschwindigkeit des drittschnellsten Rades bestimmt. Im Übergangsbereich zwischen Zunahme und Abnahme, wird der erreichte Wert der langsamsten Radgeschwindigkeit konstant gehalten. Für den Fall, daß die Geschwindigkeit des drittschnellsten Rades zu stark von einer Hilfsreferenzgeschwindigkeit abweicht, wird die Referenzgeschwindigkeit parallel zu dieser Hilfsreferenzgeschwindigkeit geführt. Gebildet wird die Hilfsreferenzgeschwindigkeit dadurch, daß sie durch die Geschwindigkeit des drittschnellsten Rades angehoben und durch die Geschwindigkeit des schnellsten Rades verringert wird. Auch sie wird in einem Übergangsbereich konstant gehalten. Liegt ein Instabilitätsfall aufgrund einer Blockierneigung vor, so wird die Steigung der Referenzgeschwindigkeit durch die Steigung der Hilfsreferenzgeschwindigkeit bestimmt. Drehen die Räder durch, so wird die Referenzgeschwindigkeit konstant gehalten und der Anstieg der Hilfsreferenzgeschwindigkeit auf eine physikalisch mögliche Fahrzeugbeschleunigung begrenzt. Werden die Hinterräder des allradgetriebenen Fahrzeuges beim Bremsen vom Antrieb entkoppelt, so wird eine leicht modifizierte Bildung der Referenzgeschwindigkeit verwendet. Außerhalb der Regelung wird die Referenzgeschwindigkeit angehoben, wenn die Geschwindigkeiten aller Räder über ihr liegen. Sind zwei oder drei Räder schneller als die Referenzgeschwindigkeit, so wird sie konstant gehalten. Ist keines oder nur eines der Räder schneller als die Referenzgeschwindigkeit, so wird die Referenzgeschwindigkeit nach unten angeglichen.

Systeme zur Regelung des Bremsschlupfes bzw. des Antriebsschlupfes sind in allgemeiner Form beispielsweise aus dem von der Robert Bosch GmbH Stuttgart herausgegebenen Buch "Bremsanlagen für Kraftfahrzeuge", VDI-Verlag, Düsseldorf, 1. Auflage, 1994, bekannt.

Systeme zur Regelung einer die Fahrdynamik eines Fahrzeuges beschreibenden Größe sind beispielsweise aus der in der Automobiltechnischen Zeitschrift (ATZ) 96, 1994, Heft 11, auf den Seiten 674 bis 689 erschienenen Veröffentlichung "FDR-die Fahrdynamikregelung von Bosch", bekannt.

Die Aufgabe der vorliegenden Erfindung besteht darin, die Ermittlung einer die Geschwindigkeit eines Fahrzeuges beschreibenden Größe zu verbessern.

Diese Aufgabe wird durch die Merkmale des Anspruchs 1 bzw. durch die des Anspruchs 10 gelöst.

### Vorteile der Erfindung

Ein Vorteil des erfindungsgemäßen Verfahrens bzw. der erfindungsgemäßen Vorrichtung gegenüber dem eingangs genannten Stand der Technik ist der, daß mit ihm bzw. mit ihr die die Geschwindigkeit des Fahrzeuges beschreibende Größe für ein beliebig angetriebenes Fahrzeug, d.h. für ein front-, bzw. heck- bzw. allradgetriebenes Fahrzeug für einen beliebigen Betriebszustand des Fahrzeuges ermittelt werden kann. Die Ermittlung der die Fahrzeuggeschwindigkeit beschreibenden Größe ist dabei unabhängig davon, ob im Fahrzeug eine Bremsschlupfregelung bzw. eine Antriebsschlupfregelung bzw. ein System zur Regelung einer die Fahrdynamik des Fahrzeuges beschreibenden Größe implementiert ist, welches beispielsweise der Brems- bzw. Antriebsschlupfregelung übergeordnet ist.

Im weiteren Verlauf wird die die Geschwindigkeit des Fahrzeuges beschreibende Größe als Referenzgeschwindigkeit des Fahrzeuges bezeichnet.

Als besonders vorteilhaft erweist sich das erfindungsgemäße Verfahren bzw. die erfindungsgemäße Vorrichtung für den Einsatz bei allradgetriebenen Fahrzeugen. Bei allradgetriebenen Fahrzeugen kann es im Antriebsfall unter bestimmten Voraussetzungen dazu kommen, daß der Wert der Referenzgeschwindigkeit des Fahrzeuges im Vergleich zu dem Wert der tatsächlich vorliegenden Geschwindigkeit des Fahrzeuges als zu hoch ermittelt wird. Mit dem erfindungsgemäßen Verfahren bzw. mit der erfindungsgemäßen Vorrichtung wird sichergestellt, daß in diesen Situationen die Referenzgeschwindigkeit des Fahrzeuges der tatsächlich vorliegenden Geschwindigkeit des Fahrzeuges angenähert wird.

Bei dem in der erfindungsgemäßen Vorrichtung implementierten erfindungsgemäßen Verfahren wird die Referenzgeschwindigkeit des Fahrzeuges in Abhängigkeit der Geschwindigkeit eines ausgewählten Rades ermittelt, welches für die Ermittlung der Referenzgeschwindigkeit des Fahrzeuges zu diesem Zeitpunkt und in diesem Betriebszustand des Fahrzeuges am besten geeignet ist. Für die Auswahl des Rades wird zum einen der Betriebszustand des Fahrzeuges ermittelt. Zum anderen werden in Abhängigkeit des Betriebszustandes des Fahrzeuges Plausibilitätsabfragen durchgeführt.

In diesem Zusammenhang haben sich zwei Plausibilitätsabfragen als besonders vorteilhaft erwiesen, die beide ausgehend von den Geschwindigkeiten der Räder durchgeführt werden. Ausgehend von einer ersten Plausibilitätsabfrage wird festgestellt, ob die Referenzgeschwindigkeit des Fahrzeuges in Abhängigkeit eines Rades ermittelbar ist, dessen Geschwindigkeit größer ist als die Referenzgeschwindigkeit des Fahrzeuges. Somit wird ausgehend von dieser ersten Plausibilitätsabfrage festgestellt, ob die Referenzgeschwindigkeit des Fahrzeuges nach oben, d.h. zu größeren Werten hin, gestützt werden darf. Ausgehend von einer zweiten Plausibilitätsabfrage wird festgestellt, ob die Referenzgeschwindigkeit des Fahrzeuges in Abhängigkeit eines Rades ermittelbar ist, dessen Geschwindigkeit kleiner ist als die Referenzgeschwindigkeit des Fahrzeuges. Somit wird ausgehend von dieser zweiten Plausibilitätsabfrage festgestellt, ob die Referenzgeschwindigkeit des Fahrzeuges nach unten, d.h. zu kleineren Werten hin, gestützt werden darf.

Vorteilhafterweise wird ausgehend von einer dritten Plausibilitätsabfrage festgestellt, ob das Ergebnis der ersten oder ob das Ergebnis der zweiten Plausibilitätsabfrage ausgewertet wird. Hierzu weist die dritte Plausibilitätsabfrage wenigstens zwei Abfragen auf.

Die erste Plausibilitätsabfrage weist wenigstens zwei Abfragen auf. In diesen Abfragen wird jeweils ausgehend von den Geschwindigkeiten zweier Räder eine Größe gebildet, die die Differenzgeschwindigkeit der beiden Räder repräsentiert. Vorteilhafterweise wird in einer ersten Abfrage eine erste Differenzgeschwindigkeit, die ausgehend von der kleinsten und der größten Radgeschwindigkeit gebildet wird, und in einer zweiten Abfrage eine zweite Differenzgeschwindigkeit, die ausgehend von der kleinsten und der zweitkleinsten Radgeschwindigkeit gebildet wird, jeweils mit einem Schwellwert verglichen. Über diese beiden Abfragen wird die Synchronisation der Geschwindigkeiten der Räder des Fahrzeuges ermittelt.

Vorteilhafterweise enthält die erste Plausibilitätsabfrage eine dritte Abfrage. In dieser dritten Abfrage wird eine die Beschleunigung des Fahrzeuges beschreibende erste Größe, die insbesondere der Kardanbeschleunigung des Fahrzeuges entspricht, wenigstens mit einer die Beschleunigung des Fahrzeuges beschreibenden zweiten Größe, die insbesondere der Längsbeschleunigung des Fahrzeuges entspricht, verglichen. Die zweite Größe kann hierbei vorteilhafterweise mit Hilfe eines Offsetwertes, welcher in Abhängigkeit einer den Zustand des Fahrzeuges beschreibenden Größe ermittelt wird, korrigiert werden.

Die zweite Plausibilitätsabfrage, ausgehend von der festgestellt wird, ob die die Geschwindigkeit des Fahrzeuges repräsentierende Größe in Abhängigkeit eines Rades ermittelbar ist, dessen Radgeschwindigkeit kleiner als die Referenzgeschwindigkeit des Fahrzeuges ist, weist wenigstens eine Abfrage auf. In dieser Abfrage wird eine Größe mit einem zugehörigen Schwellwert verglichen, wobei diese Größe ausgehend von den die Schlupfwerte der Räder repräsentierenden Größen ermittelte wird. Diese Größe wird hierbei vorteilhafterweise in Abhängigkeit einer ersten Größe, die die Summe der einzelnen Schlupfwerte repräsentiert und einer zweiten Größe, die die Summe der Beträge der einzelnen Schlupfwerte repräsentiert, gebildet.

Ein weiterer Vorteil des erfindungsgemäßen Verfahrens bzw. der erfindungsgemäßen Vorrichtung besteht darin, daß ausgehend von bekannten Schlupfregelsystemen im wesentlichen keine zusätzliche Sensorik erforderlich ist. So kann das erfindungsgemäße Verfahren bzw. die erfindungsgemäße Vorrichtung beispielsweise auf die ohnehin in Schlupfregelsystemen vorhandenen Sensoren zur Erfassung der Raddrehzahlen der einzelnen Räder zurückgreifen.

Weitere Vorteile sowie vorteilhafte Ausgestaltungen können den Unteransprüchen, der Zeichnung sowie der Beschreibung des Ausführungsbeispiels entnommen werden.

### Zeichnung

Die Zeichnung besteht aus den Figuren 1 bis 5. Figur 1 zeigt beispielhaft ein mit einem Schlupfregelsystem ausgestattetes Fahrzeug, in dem das erfindungsgemäße Verfahren bzw. die erfindungsgemäße Vorrichtung implementiert ist. In den Figuren 2 bis 4 ist ein Ausführungsbeispiel des erfindungsgemäßen Verfahrens dargestellt. Figur 5 zeigt in einem Zeitdiagramm die dem erfindungsgemäßen Verfahren bzw. die der erfindungsgemäßen Vorrichtung zugrundeliegende Problematik.

Es sei darauf hingewiesen, daß Blöcke bzw. Schritte mit derselben Bezeichnung in unterschiedlichen Figuren dieselbe Funktion haben.

### Ausführungsbeispiel

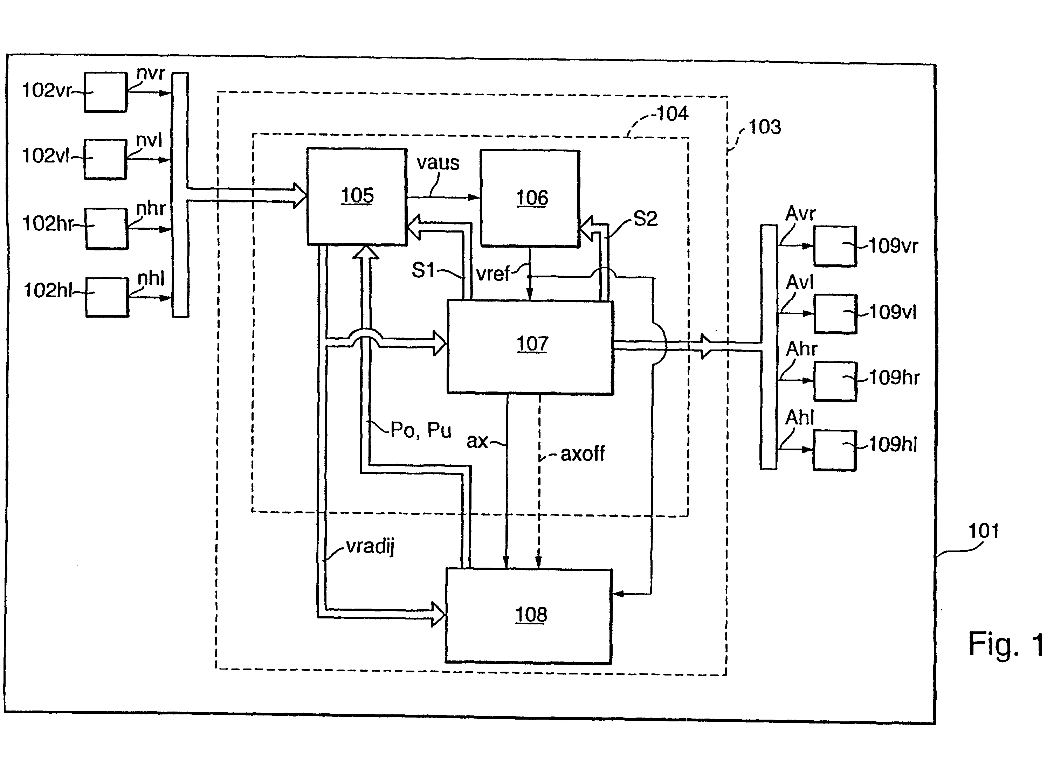

Die Erfindung geht von aus dem Stand der Technik bekannten Regelungssystemen aus, mit denen beispielsweise der Bremsschlupf bzw. der Antriebsschlupf der Räder eines Fahrzeuges beeinflußbar ist. Dies soll allerdings keine Einschränkung der erfindungsgemäßen Idee darstellen. Das erfindungsgemäße Verfahren bzw. die erfindungsgemäße Vorrichtung kann beispielsweise auch in einem System zur Regelung einer die Fahrdynamik des Fahrzeuges beschreibenden Größe, insbesondere der Gierwinkelgeschwindigkeit des Fahrzeuges, eingesetzt werden. Hierzu muß jedoch, ausgehend von Figur 1, das Fahrzeug mit zusätzlicher Sensorik ausgestattet sein.

Einleitend soll zunächst auf die Problematik bei der Ermittlung einer die Geschwindigkeit eines Fahrzeuges beschreibenden Größe, welche im weiteren Verlauf als Referenzgeschwindigkeit des Fahrzeuges bezeichnet wird, eingegangen werden. Der Referenzgeschwindigkeit vref des Fahrzeuges kommt im Zusammenhang mit Schlupfregelsystemen eine besondere Bedeutung zu, da ausgehend von dieser Größe die Ansteuersignale für die Bremsen der Räder bzw. für den Motor des Fahrzeuges ermittelt werden.

Sowohl bei einachsig angetriebenen als auch bei allradgetriebenen Fahrzeugen wird die Referenzgeschwindigkeit des Fahrzeuges ausgehend von den Radgeschwindigkeiten aller vier Räder des Fahrzeuges ermittelt. Während bei einachsig angetriebenen Fahrzeugen im Antriebsfall die Ermittlung der Referenzgeschwindigkeit des Fahrzeuges weitgehend problemlos ausgehend von den nicht angetriebenen Rädern des Fahrzeuges erfolgen kann, gestaltet sich bei allradgetriebenen Fahrzeugen in dieser Situation die Ermittlung der Referenzgeschwindigkeit des Fahrzeuges aufgrund von Kopplungseinflüssen im Antriebsstrang als äußerst komplex.

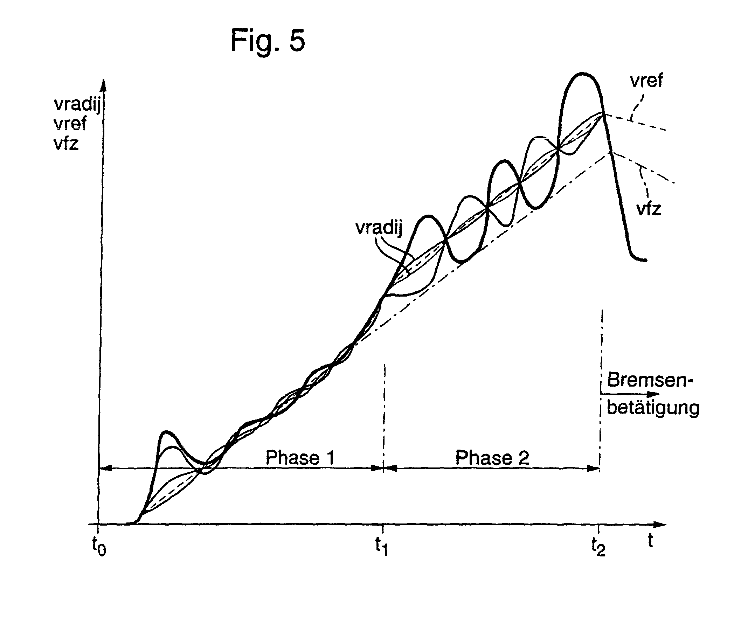

In diesem Zusammenhang sei auf Figur 5 verwiesen, in der der Antriebsfall eines allradgetriebenen Fahrzeuges dargestellt ist. Für diese Darstellung enthält Figur 5 den zeitlichen Verlauf der Geschwindigkeiten vradij der Räder eines allradgetriebenen Fahrzeuges, den zeitlichen Verlauf der Referenzgeschwindigkeit vref des Fahrzeuges sowie den zeitlichen Verlauf der tatsächlich vorliegenden Geschwindigkeit vfz des Fahrzeuges. Figur 5 weist zwei zeitliche Phasen auf. Phase 1 dauert vom Zeitpunkt t0 bis zum Zeitpunkt t1, Phase 2 dauert vom Zeitpunkt t1 bis zum Zeitpunkt t2. Zum Zeitpunkt t2 soll eine vom Fahrer ausgeführte Bremsenbetätigung vorliegen.

In Phase 1 entspricht die Referenzgeschwindigkeit vref des Fahrzeuges der tatsächlich vorliegenden Geschwindigkeit vfz des Fahrzeuges. Die in den Radgeschwindigkeiten vradij vorhandenen leichten Schwingungen führen zu keiner Entkopplung der Referenzgeschwindigkeit vref von der tatsächlich vorhandenen Geschwindigkeit vfz.

Zu Beginn von Phase 2 ist aufgrund von Kopplungseinflüssen im Antriebsstrang eine Überbewertung der Referenzgeschwindigkeit vref gegenüber der tatsächlich vorliegenden Geschwindigkeit vfz des Fahrzeuges zu erkennen - die Referenzgeschwindigkeit vref liegt über der tatsächlich vorliegenden Geschwindigkeit vfz. Die Überbewertung der Referenzgeschwindigkeit vref des Fahrzeuges führt dazu, daß durchdrehende Räder beispielsweise zu spät erkannt werden, was im weiteren Verlauf der Phase 2 zu Antriebsstrangschwingungen führt, die sich in starken Schwingungen der Radgeschwindigkeiten vradij darstellen. Diese starken Schwingungen in den Radgeschwindigkeiten vradij führen zu einer vollständigen Entkopplung von Referenzgeschwindigkeit vref und tatsächlich vorliegender Geschwindigkeit vfz des Fahrzeuges.

Durch diese vollständige Entkopplung kann es bei der in Figur 5 angedeuteten Bremsenbetätigung unverzüglich zu einer ABS-Regelung kommen, obwohl aufgrund der tatsächlich vorliegenden Geschwindigkeit vfz des Fahrzeuges eine ABS-Regelung zumindest unverzüglich nicht erforderlich wäre.

Mit Hilfe des erfindungsgemäßen Verfahrens bzw. der erfindungsgemäßen Vorrichtung wird die Ermittlung der Referenzgeschwindigkeit des Fahrzeuges insbesondere für den Antriebsfall eines allradgetriebenen Fahrzeuges so verbessert, daß die in Phase 2 dargestellten starken Schwingungen in den Radgeschwindigkeiten vradij vermieden werden, wozu es zu keiner Entkopplung der Referenzgeschwindigkeit vref von der tatsächlich vorliegenden Geschwindigkeit vfz des Fahrzeuges kommt. Die Verbesserung wird dadurch erreicht, daß die Referenzgeschwindigkeit vref in Abhängigkeit des Ergebnisses wenigstens zweier Plausibilitätsabfragen entsprechend gestützt wird.

An dieser Stelle sei bemerkt, daß das erfindungsgemäße Verfahren bzw. die erfindungsgemäße Vorrichtung für jede Art von Schlupfregelsystem, welches in einem Fahrzeug zum Einsatz kommt, und für jede Art von Fahrzeugantriebskonzept einsetzbar ist.

In Figur 1 ist mit dem Block 101 ein Fahrzeug angedeutet. Das Fahrzeug 101 enthält einen Block 103, der das Steuergerät des im Fahrzeug implementierten Regelungssystem darstellt. Bei dem im Fahrzeug implementierten Regelungssystem kann es sich um ein System zur Regelung des Bremsschlupfes und/oder um ein System zur Regelung des Antriebsschlupfes und/oder um ein System zur Regelung einer die Fahrdynamik des Fahrzeuges beschreibenden Größe handeln.

Das Steuergerät 103 enthält einen Regler 104 und einen Block 108, in welchem das erfindungsgemäße Verfahren realisiert ist. Beide Blöcke werden nachfolgend noch beschrieben.

Ferner enthält das Fahrzeug 101 Mittel 102vr, 102vl, 102hr bzw. 102hl mit denen die Geschwindigkeiten der Räder beschreibende Größen erfaßt werden. Bei diesen Mitteln handelt es sich insbesondere um Raddrehzahlsensoren. Die Räder, denen die Raddrehzahlsensoren zugeordnet sind, sind in Figur 1 nicht dargestellt. Nachfolgend wird für die Raddrehzahlsensoren, die vereinfachende Schreibweise 102ij eingeführt. Dabei gibt der Index i an, ob sich der Raddrehzahlsensor an der Hinterachse (h) oder an der Vorderachse (v) befindet. Der Index j zeigt die Zuordnung zur rechten (r) bzw. zur linken (l) Fahrzeugseite an. Diese Kennzeichnung durch die beiden Indizes i bzw. j ist für sämtliche Größen bzw. Komponenten, bei denen sie Verwendung findet, entsprechend.

Die mit den Raddrehzahlsensoren 102ij erzeugten Signale nij werden einem im Regler 104 enthaltenen Block 105 zugeführt. Neben den Signalen nij erhält der Block 105 ausgehend von dem Block 108 Größen Po bzw. Pu, sowie ausgehend von einem Block 107 Signale S1.

Zum einen erzeugt der Block 105 ausgehend von den Signalen nij die Radgeschwindigkeiten vradij, die den Blöcken 107 bzw. 108 zugeführt werden. Zum anderen wird im Block 105 ausgehend von den Größen Po bzw. Pu sowie ausgehend von den Signalen S1 ein Rad ausgewählt, dessen Radgeschwindigkeit vaus einem Block 106 zugeführt wird.

Die Auswahl des Rades im Block 105 läuft beispielsweise folgendermaßen ab: Ausgehend von den Signalen S1 wird zunächst ein Betriebszustand des Fahrzeuges ermittelt. Hierzu kann beispielsweise in Abhängigkeit einer in den Signalen S1 enthaltenen Größe, die die Beschleunigung des Fahrzeuges beschreibt, bzgl. eines Betriebszustand, in dem das Fahrzeug gebremst, bzw. bzgl. eines Betriebszustandes, in dem Fahrzeug beschleunigt wird, unterschieden werden. In Abhängigkeit des ermittelten Betriebszustand des Fahrzeuges wird mit Hilfe von Plausibilitätsabfragen ein Rad ausgewählt. Dieses Rad ist für die Ermittlung der Referenzgeschwindigkeit des Fahrzeuges zu diesem Zeitpunkt und in diesem Betriebszustand des Fahrzeuges am besten geeignet. In die Plausibilitätsabfragen gehen wenigstens die beiden Größen Po bzw. Pu ein, sowie Signale bzw. Größen ein, die in den Signalen S1 enthalten sind.

Bei den in den Signalen S1 enthaltenen Signalen handelt es sich hierbei beispielsweise um Signale, die eine Information darüber abgeben, ob für den betrachteten Zeitschritt ein Eingriff des implementierten Schlupfregelsystems vorliegt bzw. um Signale, die die Anzahl der geregelten Räder anzeigen. Ferner enthalten sie beispielsweise eine Größe, die das Beschleunigungsverhalten des Fahrzeuges beschreibt, insbesondere ob für das Fahrzeug ein Übergang von Verzögerung nach Beschleunigung vorliegt oder auch Größen, die den Schräglauf einzelner Räder beschreiben. Zusätzlich zu den aufgeführten Signalen bzw. Größen können in den Signalen S1 weitere enthalten sein.

Die Geschwindigkeit vaus des im Block 105 ausgewählten Rades wird einem Block 106 zugeführt. Ausgehend von dieser Geschwindigkeit vaus wird in diesem Block eine die Geschwindigkeit des Fahrzeuges beschreibende Größe, die Referenzgeschwindigkeit vref des Fahrzeuges ermittelt. Diese Referenzgeschwindigkeit vref wird sowohl dem Block 107 als auch dem Block 108 zugeführt. Neben der Geschwindigkeit vaus gehen in die Ermittlung der Referenzgeschwindigkeit vref weitere Größen S2 ein, die dem Block 106 ausgehend vom Block 107 zugeführt werden. Bei diesen Größen S2 handelt es sich beispielsweise um eine die Beschleunigung des Fahrzeuges beschreibende Größe, bzw. um wenigstens einen Faktor, über den vorgegeben wird, wie stark die Geschwindigkeit vaus des ausgewählten Rades in die Ermittlung der Referenzgeschwindigkeit vref eingeht.

Bei dem Block 107 handelt es sich um den Reglerkern des Steuergerätes 104. Der Reglerkern 107 erfüllt mehrere Funktionen. Zum einen ermittelt der Reglerkern 107 wenigstens ausgehend von den ihm zugeführten Radgeschwindigkeiten vradij und der Referenzgeschwindigkeit vref des Fahrzeuges, entsprechend der im Steuergerät implementierten Regelung, Ansteuersignale Aij für die den Rädern des Fahrzeuges zugeordnete Aktuatoren 109ij, mit denen die auf die einzelnen Räder wirkenden Bremsmomente eingestellt werden können. Bei den Aktuatoren 109ij handelt es sich beispielsweise um Ventile zur Modulation des Radbremszylinderdruckes. Ferner ist bei Systemen zur Regelung des Antriebsschlupfes die Ausgabe eines Signals denkbar, mit dem das von dem Motor des Fahrzeuges abgegebene Antriebsmoment beeinflußbar ist. Auf die Darstellung des Motors in Figur 1 wurde verzichtet.

An dieser Stelle sei erwähnt, daß bei Systemen zur Regelung des Bremsschlupfes für üblich in bekannter Weise zur Regelung des Bremsschlupfes die auf die einzelnen Räder wirkenden Bremsmomente durch Betätigung der Bremsen variiert werden. Bei Systemen zur Regelung des Antriebsschlupfes wird in bekannter Weise der Antriebsschlupf der Räder für üblich durch Erzeugung eines Bremsmomentes einzelner Räder bzw. durch Beeinflussung des vom Motor abgegebenen Antriebsmomentes eingestellt. Für Systeme zur Regelung des Brems - und/oder Antriebsschlupfes gilt für die Einstellung der entsprechenden Schlüpfe entsprechendes. Bei Systemen zur Regelung einer die Fahrdynamik eines Fahrzeuges beschreibenden Größe können üblicherweise die zur Regelung des entsprechenden Schlupfes erforderlichen Bremsmomente für die entsprechenden Räder unabhängig vom Fahrer individuell eingestellt werden. Ergänzend wird das vom Motor abgegebene Antriebsmoment beispielsweise im Sinne einer Antriebsmomentenregelung beeinflußt.

Desweiteren werden im Block 107 die bereits erwähnten Signale S1 bzw. S2 ermittelt. In die Ermittlung der Signale S1 bzw. S2 gehen wenigstens die Radgeschwindigkeiten vradij ein. Außerdem wird im Block 107 eine Größe ax ermittelt, die die Beschleunigung des Fahrzeuges repräsentiert. Insbesondere handelt es sich bei dieser Größe um die Längsbeschleunigung des Fahrzeuges. Die Größe ax wird beispielsweise ausgehend von den Radgeschwindigkeiten vradij ermittelt. Es ist aber auch denkbar, diese Größe mit Hilfe eines geeigneten Sensors zu erfassen oder unter Verwendung eines mathematischen Modells zu ermitteln. Die Größe ax wird zur weiteren Verarbeitung dem Block 108 zugeführt.

Sofern für die weitere Verarbeitung im Block 108 erforderlich, wird im Block 107 eine weitere Größe axoff ermittelt, die dem Block 108 bei entsprechendem Bedarf zugeführt wird. Die Größe axoff stellt einen Offsetwert bzgl. der die Beschleunigung beschreibende Größe ax dar. Dabei wird im Block 107 der Wert der Größe axoff in Abhängigkeit einer den Zustand des Fahrzeuges beschreibenden Größe, beispielsweise der Referenzgeschwindigkeit vref des Fahrzeuges, ermittelt.

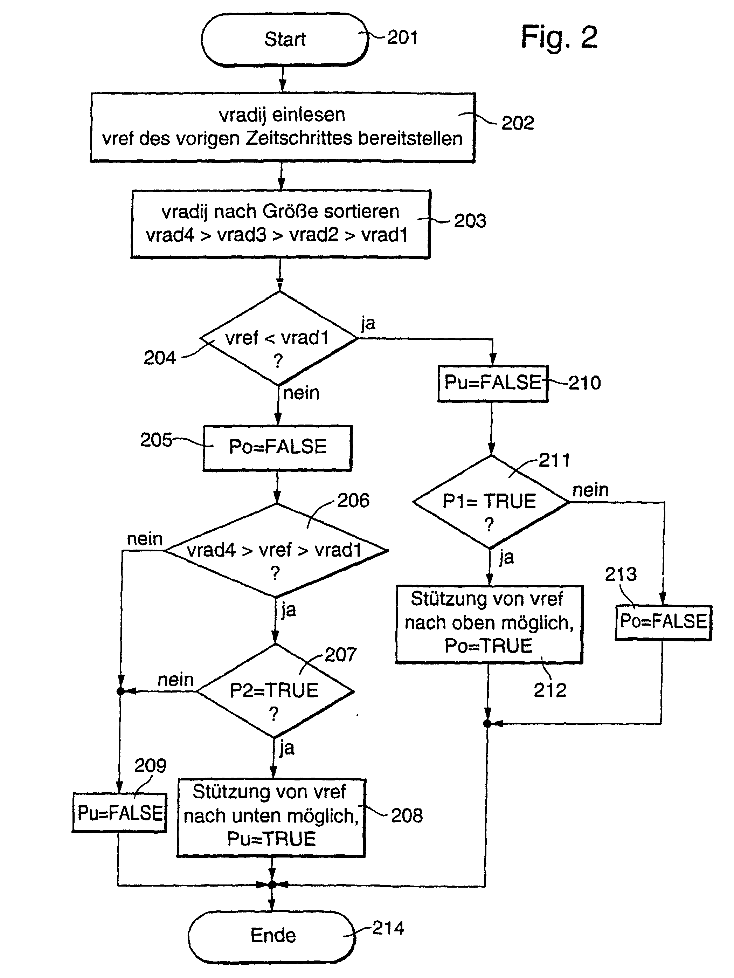

Im Block 108 läuft das erfindungsgemäße Verfahren ab. Wenigstens ausgehend von den Radgeschwindigkeiten vradij, der Referenzgeschwindigkeit vref des Fahrzeuges und der die Beschleunigung des Fahrzeuges beschreibenden Größe ax, sowie bei Bedarf des zugehörigen Offsetwertes axoff, werden im Block 108 ausgehend von einer ersten bzw. zweiten Plausibilitätsabfrage die beiden Größen Po bzw. Pu ermittelt, die dem Block 105 zugeführt werden. Auf die Ermittlung der beiden Größen Po bzw. Pu wird im Zusammenhang mit den Figuren 2, 3 sowie 4 ausführlich eingegangen.

Die bisher im Zusammenhang mit Figur 1 beschriebene Sensorik stellt im Bezug auf das erfindungsgemäße Verfahren bzw. im Bezug auf die erfindungsgemäße Vorrichtung die im wesentlichen erforderliche Sensorik dar. Wenn das Fahrzeug mit einem System zur Regelung des Bremsschlupfes bzw. mit einem System zur Regelung des Antriebsschlupfes ausgestattet ist, so sind die Raddrehzahlsensoren 102ij aufgrund dieser Systeme bereits vorhanden. Wenn das Fahrzeug mit einem System zur Regelung einer die Fahrdynamik des Fahrzeuges repräsentierenden Größe, insbesondere der Gierwinkelgeschwindigkeit des Fahrzeuges, ausgestattet ist, so sind ausgehend von den in Figur 1 dargestellten Sensoren zusätzlich wenigstens ein Drehraten- bzw. Gierratensensor und/oder ein Querbeschleunigungssensor sowie ein Lenkwinkelsensor erforderlich.

An dieser Stelle sei darauf hingewiesen, daß die im Ausführungsbeispiel aufgezeigte Verwendung des erfindungsgemäßen Verfahrens bzw. der erfindungsgemäßen Vorrichtung keine Einschränkung darstellen soll. Es ist denkbar, das erfindungsgemäße Verfahren bzw. die erfindungsgemäße Vorrichtung auch in anderen Systemen einzusetzen, bei denen ebenfalls eine die Geschwindigkeit des Fahrzeuges beschreibende Größe erforderlich ist.

In Figur 2 ist mit Hilfe eines Flußdiagrammes der wesentliche Ablauf des erfindungsgemäßen Verfahrens dargestellt. Mit dem in Figur 2 dargestellten erfindungsgemäßen Verfahren wird ausgehend von einem Wert der Referenzgeschwindigkeit vref des Fahrzeuges beispielsweise für den vorigen Zeitschritt, mit Hilfe von Plausibilitätsabfragen, eine Aussage für die Ermittlung der Referenzgeschwindigkeit vref beispielsweise des aktuellen Zeitschrittes vorgenommen. Hierbei wird festgestellt, ob eine Stützung der Referenzgeschwindigkeit vref des Fahrzeuges nach oben oder nach unten möglich ist. Nachfolgend wird auf die Angabe des jeweiligen Zeitschrittes weitestgehend verzichtet.

Alternativ zu der oben beschriebenen Zuordnung der Zeitschritte ist es auch denkbar, ausgehend von einem Wert der Referenzgeschwindigkeit vref des aktuellen Zeitschrittes eine Aussage für die Referenzgeschwindigkeit vref des nachfolgenden Zeitschrittes vorzunehmen.

Das erfindungsgemäße Verfahren startet mit einem Schritt 201. Im Anschluß an den Schritt 201 wird ein Schritt 202 ausgeführt, in dem die Radgeschwindigkeiten vradij des aktuellen Zeitschrittes eingelesen werden. Ferner wird im Schritt 202 auch die Referenzgeschwindigkeit vref des vorigen Zeitschrittes bereitgestellt.

Anschließend an den Schritt 202 wird ein Schritt 203 ausgeführt. In diesem Schritt werden die Radgeschwindigkeiten vradij nach ihrer Größe sortiert. Für die nach ihrer Größe sortierten Radgeschwindigkeiten vradij soll beispielsweise folgende Zuordnung gelten: Der Größe vrad1 sei die Geschwindigkeit des langsamsten Rades, d.h. die kleinste Radgeschwindigkeit vradij zugeordnet. Der Größe vrad2 sei die Geschwindigkeit des zweitlangsamsten Rades, der Größe vrad3 die Geschwindigkeit des zweitschnellsten und der Größe vrad4 die Geschwindigkeit des schnellsten Rades, d.h. die größte Radgeschwindigkeit vradij zugeordnet. Diese Zuordnung läßt sich durch die Relation vrad1 < vrad2 < vrad3 < vrad4 ausdrücken.

Anschließend an den Schritt 203 wird ein Schritt 204 ausgeführt. In diesem Schritt wird der Wert der Referenzgeschwindigkeit vref mit dem Wert der Radgeschwindigkeit vrad1, d.h. mit der kleinsten Radgeschwindigkeit verglichen. Wird in dieser Abfrage festgestellt, daß der Wert der Referenzgeschwindigkeit vref größer ist als der Wert der Radgeschwindigkeit vrad1, so wird im Anschluß an den Schritt 204 ein Schritt 205 ausgeführt.

Im Schritt 205 wird einer Variablen Po der Wert FALSE zugewiesen. Mit der Variablen Po wird dem Block 105 mitgeteilt, ob eine Stützung der Referenzgeschwindigkeit vref nach oben möglich ist oder nicht. Der Variablen Po wird im Schritt 205 der Wert FALSE deshalb zugewiesen, da im Schritt 204 festgestellt wurde, daß der Wert der Referenzgeschwindigkeit vref größer ist als der Wert der Radgeschwindigkeit vrad1 und aus diesem Grund eine Stützung der Referenzgeschwindigkeit vref nach oben nicht erforderlich sein dürfte.

Im Anschluß an den Schritt 205 wird ein Schritt 206 ausgeführt. In diesem Schritt findet eine Abfrage statt, bei der der Wert der Referenzgeschwindigkeit vref mit dem Wert der Radgeschwindigkeit vrad4, der größten Radgeschwindigkeit, und mit dem Wert der Radgeschwindigkeit vrad1, der kleinsten Radgeschwindigkeit verglichen wird. Wird bei dieser Abfrage festgestellt, daß der Wert der Referenzgeschwindigkeit vref kleiner als der Wert der Radgeschwindigkeit vrad4 und größer als der Wert der Radgeschwindigkeit vrad1 ist, so wird im Anschluß an den Schritt 206 ein Schritt 207 ausgeführt. Im Schritt 207 wird der Wert der Variablen P2 abgefragt. Weist die Variable P2 den Wert TRUE auf, so wird nach dem Schritt 207 ein Schritt 208 ausgeführt.

Wir im Schritt 207 festgestellt, daß die Variable P2 den Wert TRUE aufweist, so ist eine Stützung der Referenzgeschwindigkeit vref des Fahrzeuges nach unten möglich. Folglich wird im Schritt 208 der Variablen Pu der Wert TRUE zugewiesen. Durch diese Zuweisung erhält der Block 105 die Information, daß ein Rad ausgewählt werden kann, dessen Radgeschwindigkeit kleiner ist als die Referenzgeschwindigkeit vref. Somit wird im Block 106 die Referenzgeschwindigkeit vref in Abhängigkeit eines Rades ermittelt, dessen Radgeschwindigkeit kleiner ist als die Referenzgeschwindigkeit. Nach dem Schritt 208 wird der Schritt 214 ausgeführt. Mit dem Schritt 214 wird das in der Figur 2 dargestellte erfindungsgemäße Verfahren beendet.

Wird dagegen im Schritt 207 festgestellt, daß die Variable P2 nicht den Wert TRUE aufweist, so wird im Anschluß an den Schritt 207 ein Schritt 209 ausgeführt. Da die Variable P2 nicht den Wert TRUE aufweist, ist eine Stützung der Referenzgeschwindigkeit vref nach unten nicht möglich, folglich wird der Variablen Pu im Schritt 207 der Wert FALSE zugewiesen. Im Anschluß an den Schritt 209 wird der Schritt 214 ausgeführt.

Wird im Schritt 206 festgestellt, daß der Wert der Referenzgeschwindigkeit vref die durch die Relation vrad4 > vref > vrad1 beschriebene Bedingung nicht erfüllt, so wird anschließend an den Schritt 206 der bereits erwähnte Schritt 209 ausgeführt.

Wird bei der im Schritt 204 stattfindenden Abfrage festgestellt, daß der Wert der Referenzgeschwindigkeit vref kleiner ist als der Wert der Radgeschwindigkeit vrad1, so wird nach dem Schritt 204 ein Schritt 210 ausgeführt. In diesem Schritt wird der Variablen Pu der Wert FALSE zugewiesen, da es aufgrund des vorliegenden Fahrzeugzustandes, wie er sich ausgehend von dem Ergebnis der Abfrage im Schritt 204 darstellt, nicht möglich ist, die Referenzgeschwindigkeit vref nach unten zu stützen. In diesem Fall ist es sinnvoll, die Referenzgeschwindigkeit vref nach oben zu stützen.

Dem Schritt 210 folgt ein Schritt 211. In diesem Schritt wird der Wert der Variablen P1 abgefragt. Wird im Schritt 211 festgestellt, daß die Variable P1 den Wert TRUE aufweist, was gleichbedeutend damit ist, daß eine Stützung der Referenzgeschwindigkeit nach oben möglich ist, so wird im Anschluß an den Schritt 211 ein Schritt 212 ausgeführt. Im Schritt 212 wird der Variablen Po der Wert TRUE zugewiesen. Durch diese Zuweisung erhält der Block 105 die Information, daß ein Rad ausgewählt werden kann, dessen Radgeschwindigkeit größer ist als die Referenzgeschwindigkeit vref. Somit wird im Block 106 die Referenzgeschwindigkeit vref in Abhängigkeit eines Rades ermittelt, dessen Radgeschwindigkeit größer ist als die Referenzgeschwindigkeit. Nach dem Schritt 212 wird der Schritt 214 ausgeführt.

Wird dagegen im Schritt 211 festgestellt, daß die Variable P1 nicht den Wert TRUE aufweist, so wird im Anschluß an den Schritt 211 ein Schritt 213 ausgeführt, in dem der Variablen Po der Wert FALSE zugewiesen wird. Anschließend an den Schritt 213 wird de Schritt 214 ausgeführt.

Abschließend sei zu Figur 2 bemerkt, daß die in den Schritten 204 und 205 durchgeführten Abfragen zusammen eine Plausibilitätsabfrage bilden. Ferner läuft das in Figur 2 dargestellte Verfahren ständig im Hintergrund der im Fahrzeug implementierten Schlupfregelung ab.

Ferner zeigt Figur 2: Das Ergebnis der ersten Plausibilitätsabfrage wird ausgewertet, wenn in einer ersten Abfrage festgestellt wird, daß die Referenzgeschwindigkeit des Fahrzeuges kleiner ist als die kleinste Radgeschwindigkeit. Das Ergebnis der zweiten Plausibilitätsabfrage wird ausgewertet, wenn in einer zweiten Abfrage festgestellt wird, daß die Referenzgeschwindigkeit des Fahrzeuges größer als die kleinste und kleiner als die größte Radgeschwindigkeit ist. D.h. das Ergebnis der ersten Plausibilitätsabfrage, mit der festgestellt wird, ob die Referenzgeschwindigkeit des Fahrzeuges in Abhängigkeit eines Rades ermittelbar ist, dessen Geschwindigkeit größer als die Referenzgeschwindigkeit des Fahrzeuges ist, wird dann ausgewertet, wenn die Referenzgeschwindigkeit des Fahrzeuges kleiner als die kleinste Radgeschwindigkeit ist, da in diesem Fall eine Stützung nach oben sinnvoll sein dürfte. Entsprechend wird das Ergebnis der zweiten Plausibilitätsabfrage dann ausgewertet, wenn die Referenzgeschwindigkeit des Fahrzeuges größer als die kleinste und kleiner als die größte Radgeschwindigkeit ist, da in diesem Fall eine Stützung der Referenzgeschwindigkeit des Fahrzeuges nach unten sinnvoll sein dürfte. Folglich wird mit Hilfe der dritten Plausibilitätsabfrage entsprechend dem durch die Radgeschwindigkeiten des Fahrzeuges beschriebenen Betriebszustand des Fahrzeuges die geeignete Plausibilitätsabfrage ausgewählt bzw. das Ergebnis der geeigneten Plausibilitätsabfrage ausgewertet.

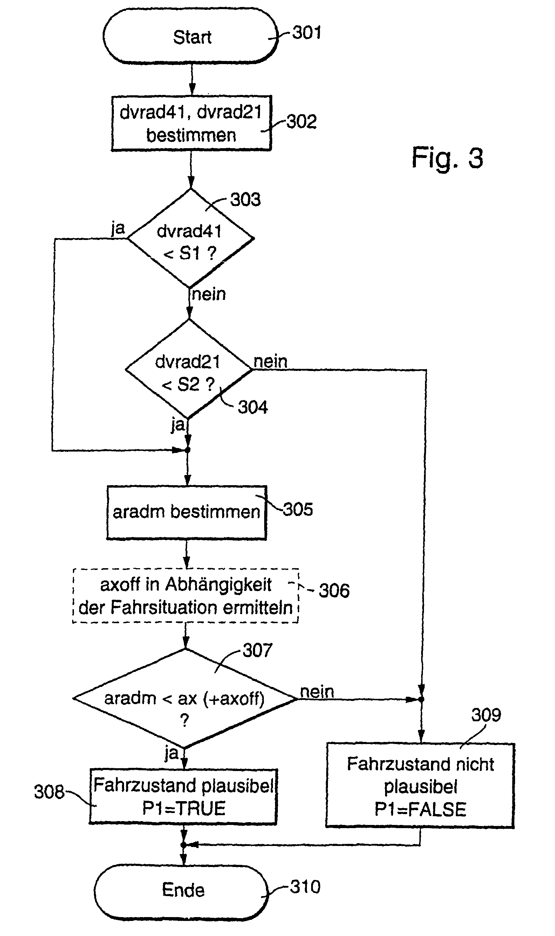

In Figur 3 ist mit Hilfe eines Flußdiagrammes eine erste Plausibilitätsabfrage dargestellt, ausgehend von der festgestellt wird, ob die Referenzgeschwindigkeit vref des Fahrzeuges nach oben gestützt werden kann, d.h. ob die Referenzgeschwindigkeit vref des Fahrzeuges in Abhängigkeit eines Rades ermittelbar ist, dessen Radgeschwindigkeit größer ist als die Referenzgeschwindigkeit vref des Fahrzeuges. Das Ergebnis der in Figur 3 dargestellten Plausibilitätsabfrage wird mit Hilfe der Variablen P1 ausgegeben. Diese Variable wird, wie bereits im Zusammenhang mit Figur 2 gezeigt, zur Weiterleitung der entsprechenden Information an den Block 105 durch die im Schritt 209 stattfindende Abfrage ausgewertet.

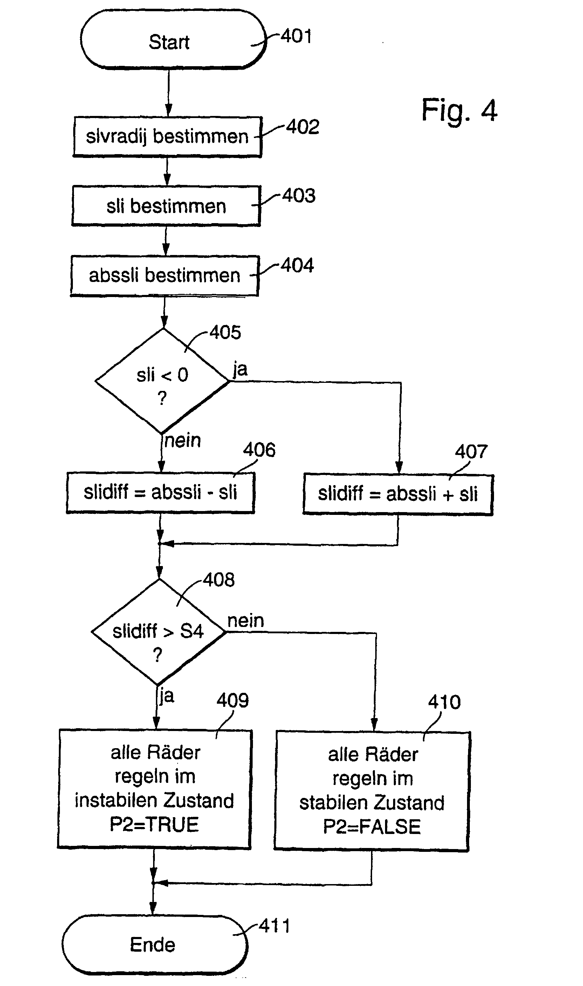

An dieser Stelle sei bemerkt, daß das in der Anmeldung enthaltene Ausführungsbeispiel so gewählt wurde, daß sowohl die in Figur 3 dargestellte erste Plausibilitätsabfrage als auch die in Figur 4 dargestellte zweite Plausibilitätsabfrage ständig im Hintergrund der im Fahrzeug implementierten Regelung abläuft. Mit Hilfe der in Figur 2 enthaltenen dritten Plausibilitätsabfrage wird festgestellt, ob das Ergebnis der ersten oder das Ergebnis der zweiten Plausibilitätsabfrage ausgewertet wird. Es ist allerdings auch denkbar, das erfindungsgemäße Verfahren so zu realisieren, daß die erste bzw. die zweite Plausibilitätsabfrage erst in Abhängigkeit des Ergebnisses der dritten Plausibilitätsabfrage ausgeführt wird.

Die in Figur dargestellte erste Plausibilitätsabfrage startet mit einem Schritt 301. Nach dem Schritt 301 folgt ein Schritt 302. In diesem Schritt werden jeweils ausgehend von zwei Radgeschwindigkeiten zwei Differenzgeschwindigkeiten ermittelt. Eine erste Differenzgeschwindigkeit dvrad41 wird ausgehend von der kleinsten Radgeschwindigkeit vrad1 und der größten Radgeschwindigkeit vrad4 gebildet. Eine zweite Differenzgeschwindigkeit dvrad21 wird ausgehend von der kleinsten und der zweitkleinsten Radgeschwindigkeit gebildet.

An den Schritt 302 schließt sich ein Schritt 303 an, in dem eine erste Abfrage ausgeführt wird. In dieser ersten Abfrage wird die erste Differenzgeschwindigkeit dvrad41 mit einem ersten Schwellwert S1 verglichen. Wird in der im Schritt 303 stattfindenden Abfrage festgestellt, daß die erste Differenzgeschwindigkeit dvrad41 nicht kleiner als der erste Schwellwert S1 ist, so wird im Anschluß an den Schritt 303 ein Schritt 304 ausgeführt. In dem Schritt 304 wird in einer zweiten Abfrage die zweite Differenzgeschwindigkeit dvrad21 mit einem zweiten Schwellwert S2 verglichen. Wird in dieser zweiten Abfrage festgestellt, daß die zweite Differenzgeschwindigkeit dvrad21 kleine als der zweite Schwellwert S2 ist, so wird anschließend an den Schritt 304 ein Schritt 305 ausgeführt.

Wird im Schritt 303 festgestellt, daß die erste Differenzgeschwindigkeit dvrad41 kleiner ist als der erste Schwellwert S1, so wird im Anschluß an den Schritt 303 der Schritt 305 ausgeführt. Wird im Schritt 304 festgestellt, daß die zweite Differenzgeschwindigkeit dvrad21 nicht kleiner ist als der zweite Schwellwert S2, so wird anschließend an den Schritt 304 ein noch zu beschreibender Schritt 309 ausgeführt.

Im Schritt 305 wird eine weitere die Beschleunigung des Fahrzeuges beschreibende Größe aradm ermittelt. Bei dieser Größe handelt es sich beispielsweise um die Kardanbeschleunigung des Fahrzeuges. Sie wird beispielsweise ausgehend von den Radgeschwindigkeiten vradij unter Bildung des Mittelwertes und der zeitlichen Ableitung ermittelt. In diesem Zusammenhang bietet sich auch eine Filterung der Größe aradm an.

Gemäß der Darstellung in Figur 3 schließt sich an den Schritt 305 ein Schritt 306 an. Durch die gestrichelte Darstellung des Schrittes 306 soll zum Ausdruck gebracht werden, daß die im Schritt 306 stattfindende Ermittlung einer Größe axoff optional ist und für die Durchführung des erfindungsgemäßen Verfahrens nicht zwingend erforderlich ist. Die Größe axoff stellt bzgl. der die Beschleunigung des Fahrzeuges beschreibenden Größe ax einen Offsetwert dar und geht, wie noch zu beschreiben ist, optional in den in einem Schritt 307 stattfindenden Vergleich ein.

Soll der Offsetwert axoff bzgl. Größe ax berücksichtigt werden, so wird anschließend an den Schritt 305 der Schritt 306 ausgeführt, dem ein Schritt 307 folgt. Soll der Offsetwert axoff bzgl. der Größe ax nicht berücksichtigt werden, so wird der Schritt 306 nicht ausgeführt, an den Schritt 305 schließt sich direkt der Schritt 307 an.

Der bereits erwähnte Offsetwert axoff wird im Schritt 306 in Abhängigkeit der Fahrsituation bzw. in Abhängigkeit des Fahrzustandes des Fahrzeuges ermittelt. Zur Ermittlung des Fahrzustandes des Fahrzeuges wird eine den Zustand des Fahrzeuges beschreibende Größe verwendet. Beispielsweise kann der Offsetwert axoff in Abhängigkeit der Referenzgeschwindigkeit vref des Fahrzeuges ermittelt werden.

Im Schritt 307 findet für die erste Plausibilitätsabfrage eine dritte Abfrage statt. Soll der oben beschriebene Offsetwert axoff nicht berücksichtigt werden, so wird bei dieser dritten Abfrage die die Beschleunigung des Fahrzeuges beschreibende erste Größe aradm mit der die Beschleunigung des Fahrzeuges beschreibenden zweiten Größe ax verglichen. Soll der Offsetwert axoff mitberücksichtigt werden, so wird bei der dritten Abfrage die Größe aradm mit einer aus der Größe ax und dem Offsetwert axoff gebildeten Summe verglichen. Die optionale Berücksichtigung des Offsetwertes axoff im Schritt 307 ist in Figur 3 durch die Einklammerung des Ausdruckes axoff angedeutet.

Wird im Schritt 307 festgestellt, daß die die Beschleunigung des Fahrzeuges beschreibende Größe aradm kleiner als der entsprechende Vergleichswert ist, was in Zusammenschau der ersten, der zweiten sowie der dritten Abfrage gleichbedeutend damit ist, daß der Fahrzustand plausibel ist, so wird nach dem Schritt 307 ein Schritt 308 ausgeführt. Da der Fahrzustand des Fahrzeuges plausibel ist, wird im Schritt 308 der Variablen P1 der Wert TRUE zugewiesen. Dadurch kann, wie bereits oben beschrieben, die Referenzgeschwindigkeit vref des Fahrzeuges in Abhängigkeit eines Rades ermittelt werden, dessen Geschwindigkeit größer ist als die Referenzgeschwindigkeit vref. Im Anschluß an den Schritt 308 wird ein Schritt 310 ausgeführt, mit dem die erste Plausibilitätsabfrage beendet wird.

Wird dagegen im Schritt 307 festgestellt, daß die die Beschleunigung des Fahrzeuges beschreibende Größe aradm nicht kleiner ist als der entsprechende Vergleichswert, was in Zusammenschau der ersten, de zweiten sowie der dritten Abfrage gleichbedeutend damit ist, daß der Fahrzustand des Fahrzeuges nicht plausibel ist, so wird anschließend an den Schritt 307 der Schritt 309 ausgeführt. In diesem Schritt wird der Variablen 309 der Wert FALSE zugewiesen. Nachfolgend schließt sich an den Schritt 309 der Schritt 310 an.

Zusammenfassend läßt sich für die in Figur 3 dargestellte erste Plausibilitätsabfrage festhalten: Ausgehend von der ersten Plausibilitätsabfrage wird die Referenzgeschwindigkeit des Fahrzeuges in Abhängigkeit eines Rades, dessen Geschwindigkeit größer als die Referenzgeschwindigkeit des Fahrzeuges ist, dann ermittelt, wenn in der ersten Abfrage festgestellt wird, daß die erste Differenzgeschwindigkeit dvrad41 kleiner als der erste Schwellwert S1 und/oder in der zweiten Abfrage festgestellt wird, daß die zweite Differenzgeschwindigkeit dvrad21 kleiner als der zweite Schwellwert S2 ist, und wenn in der dritten Abfrage festgestellt wird, daß die die Beschleunigung des Fahrzeuges beschreibende erste Größe aradm kleiner als der entsprechende Vergleichswert ist.

In Figur 4 ist mit Hilfe eines Flußdiagrammes die zweite Plausibilitätsabfrage dargestellt, ausgehend von der festgestellt wird, ob die Referenzgeschwindigkeit vref des Fahrzeuges nach unten gestützt werden kann, d.h. ob die Referenzgeschwindigkeit vref des Fahrzeuges in Abhängigkeit eines Rades ermittelbar ist, dessen Radgeschwindigkeit kleiner ist als die Referenzgeschwindigkeit vref des Fahrzeuges. Das Ergebnis der in Figur 3 dargestellten Plausibilitätsabfrage wird mit der Variablen P2 ausgegeben. Diese Variable wird, wie bereits im Zusammenhang mit Figur 2 gezeigt, zur Weiterleitung der entsprechenden Information an den Block 105 durch die im Schritt 206 stattfindende Abfrage ausgewertet.

Die zweite Plausibilitätsabfrage startet mit einem Schritt 401. Anschließend an den Schritt 401 wird ein Schritt 402 ausgeführt. In diesem Schritt wird ausgehend von den Radgeschwindigkeiten vradij eine den Schlupf des jeweiligen Rades repräsentierende Größe slvradij, die insbesondere dem Schlupfwert des jeweiligen Rades entspricht, ermittelt. Im Anschluß an den Schritt 402 wird ein Schritt 403 ausgeführt. In diesem Schritt wird ausgehend von den Größen slvradij eine erste Größe sli gebildet. Diese erste Größe sli ergibt sich durch Bildung der Summe der einzelnen Schlupfwerte slvradij und beschreibt folglich den Summenschlupf.

Nach dem Schritt 403 wird ein Schritt 404 ausgeführt, in welchem ausgehend von den Größen slvradij eine zweite Größe abssli gebildet wird. Diese zweite Größe abssli ergibt sich durch Bildung der Summe der Beträge der einzelnen Schlupfwerte slvradij und beschreibt folglich den Absolutschlupf. Anschließend an den Schritt 404 wird ein Schritt 405 ausgeführt. In diesem Schritt wird mit Hilfe einer Abfrage das Vorzeichen der ersten Größe sli ermittelt.

Wird bei dieser Abfrage festgestellt, daß die erste Größe sli größer als Null, d.h. positiv ist, so wird als nächster Schritt der Schritt 406 ausgeführt. In diesem Schritt wird ausgehend von der ersten Größe sli und der zweiten Größe abssli eine Differenz slidiff gebildet. Diese Differenz beschreibt die Abweichung des Summenschlupfes sli vom Absolutschlupf abssli. Im Anschluß an den Schritt 406 wird ein Schritt 408 ausgeführt. Wird dagegen bei der im Schritt 405 stattfindenden Abfrage festgestellt, daß die erste Größe sli kleiner als Null, d.h. negativ ist, so wird im Anschluß an den Schritt 405 ein Schritt 407 ausgeführt. Im Schritt 407 wird ausgehend von der ersten Größe sli und der zweiten Größe abssli eine Summe slidiff gebildet. Diese Summe beschreibt, da die erste Größe negativ ist, ebenfalls die Abweichung des Summenschlupfes sli vom Absolutschlupf abssli. Anschließend an den Schritt 407 wird der Schritt 408 ausgeführt.

Im Schritt 408 wird mittels einer Abfrage die im Schritt 406 bzw. die im Schritt 407 gebildete Größe slidiff mit einem zugehörigen Schwellwert S4 verglichen. Wird bei dieser Abfrage festgestellt, daß die Größe slidiff größer ist als der zugehörige Schwellwert, was gleichbedeutend damit ist, daß alle Räder im instabilen Zustand regeln, so wird anschließend an den Schritt 408 ein Schritt 409 ausgeführt, in welchem der Variablen P2 der Wert TRUE zugewiesen wird. Dadurch kann, wie bereits oben beschrieben, die Referenzgeschwindigkeit vref des Fahrzeuges in Abhängigkeit eines Rades ermittelt werden, dessen Geschwindigkeit kleiner ist als die Referenzgeschwindigkeit vref. Die Größe slidiff ist beispielsweise für die in Figur 5 enthaltene Phase 2 größer als der zugehörige Schwellwert S4, da die Referenzgeschwindigkeit vref des Fahrzeuges verglichen mit der tatsächlichen Geschwindigkeit vfz des Fahrzeuges zu hoch liegt. Aus diesem Grund ist eine Korrektur, d.h. Stützung der Referenzgeschwindigkeit nach unten erforderlich.

Wird dagegen bei der Abfrage im Schritt 408 festgestellt, daß die Größe slidiff kleiner als der zugehörige Schwellwert S4 ist, was gleichbedeutend damit ist, daß alle Räder im stabilen Zustand regeln, so wird im Anschluß an den Schritt 408 der Schritt 410 ausgeführt, in welchem der Variablen P2 ein Wert FALSE zugewiesen wird. Der in diesem Fall festgestellte Fahrzeugzustand entspricht beispielsweise dem in Phase 1 der Figur 5. In dieser Phase entspricht die Referenzgeschwindigkeit vref der tatsächlich vorliegenden Geschwindigkeit vfz des Fahrzeuges, weshalb keine Korrektur erforderlich ist. Aus diesem Grund ist auch keine Stützung der Referenzgeschwindigkeit vref nach unten erforderlich, weshalb der Variablen P2 der Wert FALSE zugewiesen wird.

Sowohl im Anschluß an den Schritt 409 als auch im Anschluß an den Schritt 410 wird ein Schritt 411 ausgeführt, mit dem die zweite Plausibilitätsabfrage beendet wird.

Zusammenfassend läßt sich für die in Figur 3 dargestellte zweite Plausibilitätsabfrage festhalten: Ausgehend von der zweiten Plausibilitätsabfrage wird die Referenzgeschwindigkeit des Fahrzeuges in Abhängigkeit eines Rades, dessen Geschwindigkeit kleiner als die Referenzgeschwindigkeit des Fahrzeuges ist, dann ermittelt, wenn in der Abfrage festgestellt, daß die Differenz oder Summe slidiff größer als der zugehörige Schwellwert ist.

Abschließend sei bemerkt, daß die in der Zeichnung gewählte Darstellung der erfindungsgemäßen Vorrichtung bzw. des erfindungsgemäßen Verfahrens keine Einschränkung der erfindungswesentlichen Idee darstellen soll.

## Patentansprüche

1. Verfahren zur Ermittlung einer die Geschwindigkeit eines Fahrzeuges beschreibenden Größe,
bei dem für die Räder des Fahrzeuges die Geschwindigkeiten dieser Räder beschreibende Größen ermittelt werden, aus denen die zugehörigen Radgeschwindigkeiten ermittelt werden, bei dem wenigstens in Abhängigkeit der Radgeschwindigkeit eines ausgewählten Rades die die Geschwindigkeit des Fahrzeuges beschreibende Größe ermittelt wird,
bei dem wenigstens eine erste bzw. eine zweite Plausibilitätsabfrage jeweils ausgehend von den Radgeschwindigkeiten durchgeführt wird,
**dadurch gekennzeichnet,**
**daß** wenigstens ausgehend von der ersten Plausibilitätsabfrage festgestellt wird, ob die die Geschwindigkeit des Fahrzeuges beschreibende Größe in Abhängigkeit eines Rades ermittelbar ist, dessen Radgeschwindigkeit größer als die die Geschwindigkeit des Fahrzeuges beschreibende Größe ist, und
**daß** wenigstens ausgehend von der zweiten Plausibilitätsabfrage festgestellt wird, ob die die Geschwindigkeit des Fahrzeuges beschreibende Größe in Abhängigkeit eines Rades ermittelbar ist, dessen Radgeschwindigkeit kleiner als die die Geschwindigkeit des Fahrzeuges beschreibende Größe ist, und
**daß** das ausgehend von der ersten bzw. der zweiten Plausibilitätsabfrage festgestellte Ergebnis bei der Auswahl des Rades berücksichtigt wird.

2. Verfahren nach Anspruch 1, **dadurch gekennzeichnet,**
**daß** ausgehend von einer dritten Plausibilitätsabfrage festgestellt wird, ob das Ergebnis der ersten oder das Ergebnis der zweiten Plausibilitätsabfrage ausgewertet wird,
wobei die dritte Plausibilitätsabfrage hierzu wenigstens zwei Abfragen aufweist, und
wobei in den Abfragen der dritten Plausibilitätsabfrage die die Geschwindigkeit des Fahrzeuges beschreibende Größe jeweils mit der Radgeschwindigkeit wenigstens eines Rades verglichen wird.

3. Verfahren nach Anspruch 2, **dadurch gekennzeichnet, daß** daß die Radgeschwindigkeiten nach ihrer Größe sortiert werden, so daß wenigstens eine kleinste bzw. eine größte Radgeschwindigkeit vorliegt, und
daß das Ergebnis der ersten Plausibilitätsabfrage ausgewertet wird, wenn in einer ersten Abfrage festgestellt wird,
daß die die Geschwindigkeit des Fahrzeuges beschreibende Größe kleiner ist als die kleinste Radgeschwindigkeit, und
daß das Ergebnis der zweiten Plausibilitätsabfrage ausgewertet wird, wenn in einer zweiten Abfrage festgestellt wird, daß die die Geschwindigkeit des Fahrzeuges beschreibende Größe größer als die kleinste und kleiner als die größte Radgeschwindigkeit ist.

4. Verfahren nach Anspruch 1, **dadurch gekennzeichnet,**
**daß** die erste Plausibilitätsabfrage, ausgehend von der festgestellt wird, ob die die Geschwindigkeit des Fahrzeuges beschreibende Größe in Abhängigkeit eines Rades ermittelbar ist, dessen Radgeschwindigkeit größer als die die Geschwindigkeit des Fahrzeuges beschreibende Größe ist, wenigstens zwei Abfragen aufweist,
wobei in den Abfragen jeweils die ausgehend von den Radgeschwindigkeiten zweier Räder gebildete Größe, die insbesondere die Differenzgeschwindigkeit der beiden Räder repräsentiert, mit einem zugehörigen Schwellwert verglichen wird.

5. Verfahren nach Anspruch 4, **dadurch gekennzeichnet,**
**daß** die Radgeschwindigkeiten nach ihrer Größe sortiert werden, und
**daß** in einer ersten Abfrage eine erste Größe, insbesondere eine erste Differenzgeschwindigkeit, die ausgehend von der kleinsten und der größten Radgeschwindigkeit gebildet wird, mit einem ersten Schwellwert verglichen wird, und
**daß** in einer zweiten Abfrage eine zweite Größe, insbesondere eine zweite Differenzgeschwindigkeit, die ausgehend von der kleinsten und der zweitkleinsten Radgeschwindigkeit gebildet wird, mit einem zweiten Schwellwert verglichen wird.

6. Verfahren nach Anspruch 4, **dadurch gekennzeichnet,**
**daß** die erste Plausibilitätsabfrage ferner eine dritte Abfrage aufweist,
wobei in dieser Abfrage eine erste die Beschleunigung des Fahrzeuges beschreibende Größe wenigstens mit einer zweiten die Beschleunigung des Fahrzeuges beschreibenden Größe verglichen wird, wobei insbesondere die zweite Größe mit Hilfe eines Offsetwertes, der in Abhängigkeit einer den Zustand des Fahrzeuges beschreibenden Größe ermittelt wird, korrigierbar ist.

7. Verfahren nach Anspruch 5 und 6, **dadurch gekennzeichnet, daß** ausgehend von der ersten Plausibilitätsabfrage die die Geschwindigkeit des Fahrzeuges beschreibende Größe in Abhängigkeit eines Rades ermittelbar ist, dessen Radgeschwindigkeit größer als die die Geschwindigkeit des Fahrzeuges beschreibende Größe ist,
wenn in der ersten Abfrage festgestellt wird, daß die erste Größe kleiner als der erste Schwellwert und/oder in der zweiten Abfrage festgestellt wird, daß die zweite Größe kleiner als der zweite Schwellwert ist, und
wenn in der dritten Abfrage festgestellt wird, daß die die Beschleunigung des Fahrzeuges beschreibende erste Größe kleiner ist als wenigstens die die Beschleunigung des Fahrzeuges beschreibende zweite Größe.

8. Verfahren nach Anspruch 1, **dadurch gekennzeichnet,**
**daß** wenigstens in Abhängigkeit der Radgeschwindigkeiten Größen ermittelt werden, die die Schlupfwerte der Räder repräsentieren, und
**daß** ausgehend von der zweiten Plausibilitätsabfrage festgestellt wird, ob die die Geschwindigkeit des Fahrzeuges beschreibende Größe in Abhängigkeit eines Rades ermittelbar ist, dessen Radgeschwindigkeit kleiner als die die Geschwindigkeit des Fahrzeuges beschreibende Größe ist, wobei die zweite Plausibilitätsabfrage wenigstens eine Abfrage aufweist, und
wobei in dieser Abfrage wenigstens ausgehend von den Größen, die die Schlupfwerte der Räder repräsentieren, ein Vergleich mit einem zugehörigen Schwellwert durchgeführt wird.

9. Verfahren nach Anspruch 8, **dadurch gekennzeichnet,**
**daß** ausgehend von den Größen, die die Schlupfwerte der Räder repräsentieren, wenigstens eine erste Größe, die insbesondere die Summe der einzelnen Schlupfwerte repräsentiert, bzw. eine zweite Größe, die insbesondere die Summe der Beträge der einzelnen Schlupfwerte repräsentiert, ermittelt wird, und
**daß** ausgehend von der zweiten Plausibilitätsabfrage die die Geschwindigkeit des Fahrzeuges beschreibende Größe in Abhängigkeit eines Rades ermittelbar ist, dessen Radgeschwindigkeit kleiner als die die Geschwindigkeit des Fahrzeuges beschreibende Größe ist,
wenn in der Abfrage festgestellt wird, daß eine aus der ersten bzw. der zweiten Größe gebildete Differenz oder Summe größer als der zugehörige Schwellwert ist.

10. Vorrichtung zur Ermittlung einer die Geschwindigkeit eines Fahrzeuges beschreibenden Größe,
wobei erste Mittel vorhanden sind, mit denen für die Räder des Fahrzeuges die Geschwindigkeiten dieser Räder beschreibende Größen ermittelbar sind,
aus denen mit zweiten Mitteln die zugehörigen Radgeschwindigkeiten ermittelt werden,
wobei ferner mit dritten Mittel wenigstens in Abhängigkeit der Radgeschwindigkeit eines mit den zweiten Mitteln ausgewählten Rades die die Geschwindigkeit des Fahrzeuges beschreibende Größe ermittelbar ist,
wobei vierte Mittel zur Durchführung einer ersten bzw. einer zweiten Plausibilitätsabfrage, die jeweils wenigstens ausgehend von den Radgeschwindigkeiten durchgeführt werden, vorhanden sind,
**dadurch gekennzeichnet,**
**daß** in den vierten Mitteln wenigstens ausgehend von der ersten Plausibilitätsabfrage festgestellt wird, ob die die Geschwindigkeit des Fahrzeuges beschreibende Größe in Abhängigkeit eines Rades ermittelbar ist, dessen Radgeschwindigkeit größer als die die Geschwindigkeit des Fahrzeuges beschreibende Größe ist, und
**daß** in den vierten Mitteln wenigstens ausgehend von der zweiten Plausibilitätsabfrage festgestellt wird, ob die die Geschwindigkeit des Fahrzeuges beschreibende Größe in Abhängigkeit eines Rades ermittelbar ist, dessen Radgeschwindigkeit kleiner als die die Geschwindigkeit des Fahrzeuges beschreibende Größe ist, und
**daß** das in den vierten Mitteln ausgehend von der ersten bzw. der zweiten Plausibilitätsabfrage festgestellte Ergebnis in den zweiten Mitteln bei der Auswahl des Rades berücksichtigt wird.

## Claims

1. Method for determining a variable describing the speed of a vehicle,
in which there are determined for the wheels of the vehicle variables which describe the speeds of these wheels and from which the associated wheel speeds are determined,
in which the variable describing the speed of the vehicle is determined at least as a function of the wheel speed for a selected wheel,
in which at least a first or a second plausibility interrogation is carried out starting from the wheel speeds,
**characterized**
**in that** at least starting from the first plausibility interrogation it is established whether the variable describing the speed of the vehicle can be determined as a function of a wheel whose wheel speed is greater than the variable describing the speed of the vehicle, and
**in that** at least starting from the second plausibility interrogation it is established whether the variable describing the speed of the vehicle can be determined as a function of a wheel whose wheel speed is lower than the variable describing the speed of the vehicle, and
**in that** the result established starting from the first or the second plausibility interrogation is taken into account in selecting the wheel.

2. Method according to Claim 1, **characterized in that** starting from a third plausibility interrogation it is established whether the result of the first or the result of the second plausibility interrogation is evaluated,
the third plausibility interrogation having at least two interrogations for this purpose, and
the variable describing the speed of the vehicle being compared in each case in the interrogations of the third plausibility interrogation with the wheel speed of at least one wheel.

3. Method according to Claim 2, **characterized**
**in that** the wheel speeds are sorted in terms of their size such that at least a lowest or a greatest wheel speed is present, and
**in that** the result of the first plausibility interrogation is evaluated when it is established in a first interrogation that the variable describing the speed of the vehicle is smaller than the lowest wheel speed, and in that the result of the second plausibility interrogation is evaluated when it is established in a second interrogation that the variable describing the speed of the vehicle is greater than the lowest and lower than the greatest wheel speed.

4. Method according to Claim 1, **characterized in that** the first plausibility interrogation starting from which it is established whether the variable describing the speed of the vehicle can be determined as a function of a wheel whose wheel speed is greater than the variable describing the speed of the vehicle has at least two interrogations,
the variable which is formed starting from the wheel speeds of two wheels and represents, in particular, the differential speed of the two wheels being compared in each case in the interrogations with an associated threshold value.

5. Method according to Claim 4, **characterized**
**in that** the wheel speeds are sorted in terms of their size, and
**in that** a first variable, in particular a first differential speed, which is formed starting from the lowest and the greatest wheel speed is compared in a first interrogation with a first threshold value, and
**in that** a second variable, in particular a second differential speed, which is formed starting from the lowest and the second lowest wheel speed, is compared in a second interrogation with a second threshold value.

6. Method according to Claim 4, **characterized in that** the first plausibility interrogation further has a third interrogation,
a first variable describing the acceleration of the vehicle being compared in this interrogation at least with a second variable describing the acceleration of the vehicle, it being possible, in particular, for the second variable to be corrected with the aid of an offset value which is determined as a function of a variable describing the state of the vehicle.

7. Method according to Claims 5 and 6, **characterized in that** starting from the first plausibility interrogation it is possible to determine the variable describing the speed of the vehicle as a function of a wheel whose wheel speed is greater than the variable describing the speed of the vehicle,
when it is established in the first interrogation that the first variable is smaller than the first threshold value and/or it is established in the second interrogation that the second variable is smaller than the second threshold value, and
when it is established in the third interrogation that the first variable describing the acceleration of the vehicle is smaller than at least the second variable describing the acceleration of the vehicle.

8. Method according to Claim 1, **characterized in that** variables which represent the slip values of the wheels are determined at least as a function of the wheel speeds, and
**in that** it is established starting from the second plausibility interrogation whether the variable describing the speed of the vehicle can be determined as a function of a wheel whose wheel speed is lower than the variable describing the speed of the vehicle, the second plausibility interrogation having at least one interrogation, and
a comparison with an associated threshold value being carried out in this interrogation at least starting from the variables which represent the slip values of the wheels.

9. Method according to Claim 8, **characterized in that** starting from the variables which represent the slip values of the wheels at least one first variable which represents, in particular, the sum of the individual slip values, or a second variable which represents, in particular, the sum of the absolute values of the individual slip values is determined, and
**in that** starting from the second plausibility interrogation the variable describing the speed of the vehicle can be determined as a function of a wheel whose wheel speed is lower than the variable describing the speed of the vehicle,
when it is established in the interrogation that a difference or sum formed from the first and the second variable is greater than the associated threshold value.

10. Device for determining a variable describing the speed of a vehicle,
first means being present with the aid of which it is possible to determine for the wheels of the vehicle variables describing the speeds of these wheels,
from which the associated wheel speeds are determined with the aid of second means,
it further being possible to use third means to determine the variable describing the speed of the vehicle, at least as a function of the wheel speed of a wheel selected with the aid of the second means,
fourth means being present for carrying out a first and a second plausibility interrogation, which are carried out in each case at least starting from the wheel speeds,
**characterized**
**in that** it is established in the fourth means, at least starting from the first plausibility interrogation, whether the variable describing the speed of the vehicle can be determined as a function of a wheel whose wheel speed is greater than the variable describing the speed of the vehicle, and
**in that** it is established in the fourth means, at least starting from the second plausibility interrogation, whether the variable describing the speed of the vehicle can be determined as a function of a wheel whose wheel speed is lower than the variable describing the speed of the vehicle, and
**in that** the result established in the fourth means starting from the first or the second plausibility interrogation is taken into account in the second means when selecting the wheel.

## Revendications

1. Procédé pour déterminer une grandeur décrivant la vitesse d'un véhicule selon lequel :
- on détermine les grandeurs décrivant les vitesses des roues du véhicule et à partir de celle-ci, on détermine les vitesses de roue correspondantes,
- au moins en fonction de la vitesse d'une roue sélectionnée, on détermine la grandeur décrivant la vitesse du véhicule,
- on effectue au moins une première et une seconde interrogation de vraisemblance chaque fois à partir des vitesses de roue,
**caractérisé en ce qu'**
- au moins à partir de la première interrogation de vraisemblance, on détermine si la grandeur décrivant la vitesse du véhicule se détermine en fonction d'une roue dont la vitesse de roue est supérieure à la grandeur décrivant la vitesse du véhicule, et
- au moins en partant de la seconde interrogation de vraisemblance, on détermine si la grandeur décrivant la vitesse du véhicule se détermine en fonction d'une roue dont la vitesse est inférieure à celle de la grandeur décrivant la vitesse du véhicule, et
- à partir du résultat constaté par la première ou la seconde interrogation de vraisemblance, on tient compte de la sélection de la roue.

2. Procédé selon la revendication 1,
**caractérisé en ce qu'**
- à partir d'une troisième interrogation de vraisemblance, on détermine si le résultat de la première ou de la seconde interrogation de vraisemblance sera exploité et la troisième interrogation de vraisemblance comporte à cet effet au moins deux interrogations, et
- dans les interrogations de la troisième interrogation de vraisemblance, on compare la grandeur dérivant la vitesse du véhicule chaque fois à la vitesse d'au moins une roue.

3. Procédé selon la revendication 2,
**caractérisé en ce qu'**
- on classe les vitesses de roue suivant leur amplitude pour disposer au moins de la plus petite ou de la grande vitesse de roue, et
- on exploite le résultat de la première interrogation de vraisemblance si dans cette première interrogation, on constate que la grandeur décrivant la vitesse du véhicule est inférieure à la plus petite vitesse de roue, et
- on exploite le résultat de la seconde interrogation de vraisemblance si dans une seconde interrogation, on constate que la grandeur décrivant la vitesse du véhicule est supérieure à la plus petite vitesse de roue et inférieure à la plus grande de roue.

4. Procédé selon la revendication 1,
**caractérisé en ce que**
- la première interrogation de vraisemblance à partir de laquelle on détermine si la grandeur décrivant la vitesse du véhicule se détermine en fonction d'une roue dont la vitesse est supérieure à celle de la grandeur décrivant la vitesse du véhicule, comprend au moins deux interrogations, et
- dans les interrogations, chaque fois la grandeur formée à partir des vitesses de deux roues et qui représentent notamme une différence de vitesse des deux roues, est comparée à un seuil correspondant.

5. Procédé selon la revendication 4,
**caractérisé en ce qu'**
on classe les vitesses de roue suivant leur amplitude, et
dans une première interrogation, on forme une première grandeur notamment une première différence de vitesse entre la plus petite et la plus grande vitesse de roue, que l'on compare à un premier seuil, et
dans une seconde interrogation, on forme une seconde grandeur notamment une seconde différence de vitesse à partir de la plus petite et de la seconde vitesse la plus petite des roues que l'on compare à un second seuil.

6. Procédé selon la revendication 4,
**caractérisé en ce que**
la première interrogation de vraisemblance contient en outre une troisième interrogation,
dans cette interrogation, on compare une première grandeur décrivant l'accélération du véhicule à au moins une seconde grandeur décrivant l'accélération du véhicule, et
en particulier on corrige la seconde grandeur à l'aide d'une valeur de décalage obtenue en fonction d'une grandeur décrivant l'état du véhicule.

7. Procédé selon les revendications 5 et 6,
**caractérisé en ce qu'**
à partir de la première interrogation de vraisemblance, on détermine la grandeur décrivant la vitesse du véhicule en fonction d'une roue dont la vitesse est supérieure à celle de la grandeur décrivant la vitesse du véhicule,
quand par une première interrogation, on constate que la première grandeur est inférieure au premier seuil et/ou quand la seconde interrogation, constate que la seconde grandeur est inférieure au second seuil, et
quand dans la troisième interrogation, on constate que la première grandeur décrivant l'accélération du véhicule est inférieure à au moins la seconde grandeur décrivant l'accélération du véhicule.

8. Procédé selon la revendication 1,
**caractérisé en ce qu'**
on détermine des grandeurs au moins en fonction des vitesses de roue qui représentent le patinage des roues,
à l'aide de la seconde interrogation de vraisemblance, on détermine si la grandeur décrivant la vitesse du véhicule se détermine en fonction d'une roue dont la vitesse est inférieure à la grandeur décrivant la vitesse du véhicule, et la seconde interrogation de vraisemblance comprend au moins une interrogation, et
par cette interrogation, au moins à partir des grandeurs représentant le patinage des roues, on effectue une comparaison avec un seuil correspondant.

9. Procédé selon la revendication 8,
**caractérisé en ce qu'**
à partir des grandeurs représentant le patinage des roues, on détermine au moins une première grandeur représentant notamment la somme des différentes valeurs de patinage ou une seconde grandeur représentant notamment la somme des amplitudes des différentes valeurs de patinage, et
à partir de la seconde interrogation de vraisemblance on détermine la grandeur décrivant la vitesse du véhicule en fonction d'une roue dont la vitesse est inférieure à celle correspondant à la grandeur décrivant la vitesse du véhicule,
quand par l'interrogation, on constate qu'une différence ou une somme formée à partir de la première et de la seconde grandeur, est supérieure au seuil correspondant.

10. Dispositif pour déterminer une grandeur décrivant la vitesse d'un véhicule comprenant :
les premiers moyens à l'aide desquels on détermine des grandeurs décrivant les vitesses de ces roues du véhicule,
des seconds moyens qui, à partir de ces grandeurs déterminent les vitesses de roues prise en compte,
et en plus des troisièmes moyens qui, au moins en fonction de la vitesse de roue d'une roue sélectionnée par les seconds moyens, déterminent la grandeur décrivant la vitesse du véhicule,
des quatrièmes moyens pour effectuer une première et une seconde interrogations de vraisemblance appliquées chaque fois au moins à partir des vitesses de roues,
**caractérisé par**
des quatrièmes moyens qui à partir de la première interrogation de vraisemblance déterminent si la grandeur décrivant la vitesse du véhicule se détermine en fonction d'une roue dont la vitesse est supérieure à celle correspondant à la grandeur décrivant la vitesse du véhicule, et dans les quatrièmes moyens, au moins à partir de la seconde interrogation de vraisemblance, on détermine si la grandeur décrivant la vitesse du véhicule se détermine en fonction d'une roue dont la vitesse est inférieure à celle représentée par la grandeur décrivant la vitesse du véhicule, et
dans les quatrièmes moyens, à partir du résultat de la première ou de la seconde interrogation de vraisemblance, on tient compte des résultats dans les seconds moyens pour la sélection de la roue.
